Europäisches Patentamt

European Patent Office

Office européen des brevets

(11) Numéro de publication: **0 228 962 B1**

## FASCICULE DE BREVET EUROPEEN

(45) Date de publication de fascicule du brevet: **20.05.92**  (51) Int. Cl.⁵: **B62D 7/14**

(21) Numéro de dépôt: **86402875.8**

(22) Date de dépôt: **19.12.86**

(54) **Système de direction perfectionné pour véhicule automoteur comportant au moins deux essieux directeurs.**

(30) Priorité: **20.12.85 FR 8519108**
**27.10.86 FR 8615031**
**24.11.86 FR 8616445**

(43) Date de publication de la demande:
**15.07.87 Bulletin 87/29**

(45) Mention de la délivrance du brevet:
**20.05.92 Bulletin 92/21**

(84) Etats contractants désignés:
**BE DE FR GB NL**

(56) Documents cités:
**FR-A- 2 236 712      FR-A- 2 369 139**
**FR-A- 2 507 989      FR-A- 2 544 163**
**GB-A- 999 177        GB-A- 2 180 511**
**US-A- 3 596 730      US-A- 3 903 983**
**US-A- 4 175 638**

(73) Titulaire: **Matrot, Louis**
**Noyers Saint Martin**
**F-60480 Froissy(FR)**

Titulaire: **Matrot, Jean-Paul**
**Noyers Saint Martin**
**F-60480 Froissy(FR)**

(72) Inventeur: **Matrot, Louis**
**Noyers Saint Martin**
**F-60480 Froissy(FR)**
Inventeur: **Matrot, Jean-Paul**
**Noyers Saint Martin**
**F-60480 Froissy(FR)**

(74) Mandataire: **Loyer, Bertrand et al**
**Cabinet Pierre Loyer 77, rue Boissière**
**F-75116 Paris(FR)**

EP 0 228 962 B1

**Description**

Certains véhicules automoteurs possèdent deux essieux directeurs, dont le braquage est commandé simultanément, comme cela est décrit dans le brevet français FR-A-2.369.139 du 26 octobre 1976 au nom des déposants, ainsi que dans le brevet français FR-A-2.544.163 du 13 avril 1984 et dans les deux brevets US-A-3.596.730 et US-A-3.903.983.

Le but de la présente invention est de proposer des moyens de contrôle plus perfectionnés et d'utilisation plus simple et plus sûre.

Le système s'applique généralement aux véhicules automoteurs, et en particulier aux véhicules agricoles porteurs de pulvérisateurs.

Pour ceux-ci, l'utilisation de quatre roues directrices présente plusieurs avantages.

1°) En bout de champ, le rayon de virage est réduit en braquant les roues arrière en opposition des roues avant.

2°) Dans les pentes transversales, la possibilité d'orienter les roues arrière en parallèle des roues avant permet d'assurer une progression en ligne droite quelle que soit la pente.

3°) Naturellement, il est nécessaire que le véhicule puisse également être utilisé en configuration usuelle, c'est-à-dire, roues avant directrices et roues arrière bloquées, soit pour certain travaux dans les cultures, soit plus particulièrement, sur route ou en cours de déplacement à vitesses relativement élevées.

Ces trois modes de direction sont connus.

Dans les systèmes connus, la liaison entre les directions des essieux avant et arrière est généralement assurée mécaniquement ou hydrauliquement, ce qui rend très difficile le passage d'un mode à un autre, puisqu'il faut garder le synchronisme, ou le blocage des roues arrière pour la route en position centrée.

Dans un système plus évolué, l'orientation des roues avant et arrière est contrôlée électroniquement mais le choix se fait uniquement par une commande manuelle, ce qui rend difficile les manoeuvres pour obtenir les virages courts et il n'y a aucune sécurité automatique et sûre, pour bloquer les roues arrière aux grandes vitesses.

Le brevet US-A-4 175 638 décrit un dispositif de ce type tel que défini dans le préambule de la revendication 1, dans lequel le conducteur du tracteur peut choisir un mode d'asservissement à l'aide d'un bouton de sélection mis à sa disposition.

Dans cette réalisation, le conducteur peut également actionner un basculeur pour passer dans une configuration de virage court en annulant momentanément le mode d'asservissement en cours. Le retour du basculeur en position neutre remet automatiquement en service le mode d'asservissement initial

Dans ce dispositif, aucune disposition n'est prévue pour ramener les roues arrières dans leur position centrée bloquée lorsque le tracteur rejoint la route après le travail.

L'invention telle que définie dans la revendication 1 permet de pallier cet inconvénient.

De plus la commande du basculeur n'est pas très aisée à mettre en oeuvre pour le conducteur car il doit définir le sens de braquage des roues arrières afin de définir le sens d'actionnement dudit basculeur.

Une telle action présente l'inconvénient d'obliger le conducteur, d'une part, à fixer son attention sur la définition du sens de braquage, et, d'autre part, à enlever une main du volant, ce qui est tout à fait gênant à un moment où il négocie un virage serré nécessitant une conduite attentionnée.

Pour pallier ces inconvénients, des perfectionnements additionnels de l'invention consistent d'une part à prévoir une commande, liée à la vitesse, obligeant la direction à rester en position roues arrière fixes et centrées, seules les roues avant restant directrices afin d'assurer une plus grande facilité d'emploi, et une plus grande sûreté, et, d'autre part à compléter le sélecteur de mode de direction par une commande par pédale, qui temporairement fait passer en mode "opposition" pour faciliter les virages en en réduisant le rayon et en faisant passer sensiblement les roues arrière dans la trace des roues avant, le mode antérieur choisi étant ensuite rétabli a la suppression de l'action de cette commande.

La commande liée à la vitesse peut être réalisée, par exemple, soit à partir du levier de changement de gammes de vitesse, soit à partir du dépassement d'une certaine vitesse d'avancement déterminée.

Un autre perfectionnement de l'invention consiste à prévoir un moyen de réglage, à la disposition du conducteur, qui influe sur la commande, de telle façon que dans le mode "parallèle" -pour les travaux en devers, c'est-à-dire en pente transversale -l'angle d'orientation des roues arrière corresponde à celui des roues avant, mais affecté d'un facteur de réduction réglable à volonté de telle sorte que pour un même angle de braquage des roues avant, les roues arrière puissent prendre un angle d'orientation allant de la similitude avec celui des roues avant jusqu'à un écart se rapprochant du zéro, et qui ramène les roues arrière près ou à la position centrée.

EP 0 228 962 B1

Ceci permet de maintenir une progression en ligne droite, les roues arrière passant dans la trace des roues avant.

En effet, il est apparu que pour de nombreuses raisons, la charge sur les pneus avant et arrière peut être différente , par exemple :

- Répartition des poids, par variation du remplissage partiel de la cuve d'un pulvérisateur ;
- Effet de la pente sur la répartition d'un même poids sur les essieux arrière et avant -l'un est rigidement lie au châssis alors que l'autre y est articulé à rotation pour s'adapter aux dénivellations du terrain.

D'autre part, l'adhérence motrice et/ou directrice des différentes roues peut être variable dans des proportions importantes suivant l'état du sol, son humidité ou sa sécheresse, et l'importance de la pente.

La solution proposée par ce perfectionnement permet au chauffeur de pallier ces variations en modifiant le réglage de proportionnalité d'angle pour obtenir une marche correcte en ligne droite.

Une autre forme de réalisation consiste à prévoir un mode de direction manuelle, par exemple pour orienter les roues arrière dans une pente transversale, mais en gardant toujours l'action du moyen commandant l'orientation temporaire pour les virages et celle du moyen interdisant tout mouvement de ces roues arrière, et qui est par exemple lié à la gamme de vitesses choisie, mais avec une caractéristique nouvelle de l'action de la pédale.

Ce mode de direction manuelle permet de doser l'inclinaison de l'essieu arrière suivant la pente et les réactions du véhicule . Une caractéristique importante de ce mode de réalisation est qu'une action sur la pédale permet de passer en mode "virage", mais lorsque la pédale revient à sa position de point mort, elle commande le retour en position centrée de l'essieu arrière, ce qui permet à la suite d'un virage, généralement d'un demi-tour, de repartir droit sans avoir à annuler la correction antérieure, et d'effectuer si nécessaire la nouvelle correction -car après un demi-tour, la pente se trouve inversée.

A titre d'exemple non limitatifs et pour faciliter la compréhension de l'invention, on a représenté aux dessins annexés :

Figure 1 une vue schématique illustrant un premier mode de réalisation;

Figure 2 une vue schématique, à échelle agrandie, d'une partie de la figure 1 illustrant une variante de réalisation;

Figure 3, une vue représentant les courbes représentatives des divers modes d'action de l'invention;

Figure 4, une vue schématique d'un deuxième mode de réalistion de l'invention;

Figure 5, une vue schématique d'un troisième mode de réalisation de l'invention;

Figure 6, une vue schématique à échelle agrandie d'une partie correspondant à la figure 2, illustrant une autre variante de réalisation;

Figure 7, un schéma synoptique du moyen de blocage commandé par la vitesse.

La description et le schéma annexé, donnés à titre explicatif non limitatif, feront mieux comprendre les particularités et avantages de l'invention.

En 1 et 2 sont représentés les capteurs qui saisissent les informations sur l'orientation des roues avant 1 et arrière 2. Ils sont alimentés par les liaisons 3 et 4 et envoient leurs informations par les liaisons 5 et 6. La liaison 5 est reliée directement au comparateur 7 alors que la liaison 6 est reliée, à travers différènts contacts à la boîte de programmation représentée schématiquement en 8, interposée entre la liaison 6 et le comparateur 7.

Schématiquement, le programmateur 8 comprend un sélecteur 9 qui permet de choisir un des trois modes à savoir :

a- roues parallèles -pour terrain en pente transversale,

b- roues avant directrices -roues arrière bloquées, centrées, pour la route ou le travail à plat.

c- roues en opposition pour les virages courts.

La liaison 6 aboutit au sélecteur 9 du programmateur 8 par trois liaisons 12, 14 et 15 commandées elles-mêmes par deux inverseurs 10 et 11, l'inverseur 11 étant placé en aval de l'inversuer 10.

L'inverseur 10 est commandé par le levier 13 qui commande les gammes haute et basse de la boîte de vitesse du véhicule. Lorsque le levier est en H (gamme haute) pour les grandes vitesses, l'inverseur 10 bascule et la liaison 6 arrive dans le programmateur 8 par l'entrée 15 qui commande la disposition "b" (roues arrière bloquées et centrées -roues avant seules directrices).

L'inverseur 11 est commandé par une pédale 16 et conduit la liaison 6 , par la liaison 17, vers la borne 12 qui commande l'orientation roues "en opposition" pour virage court, selon la disposition "c".

Comme l'inverseur 10 du levier 13 est le premier, c'est lui qui a la priorité, une action sur la pédale 16 de l'inverseur 11 n'aura d'effet que si le levier 13 est en gamme basse B.

3

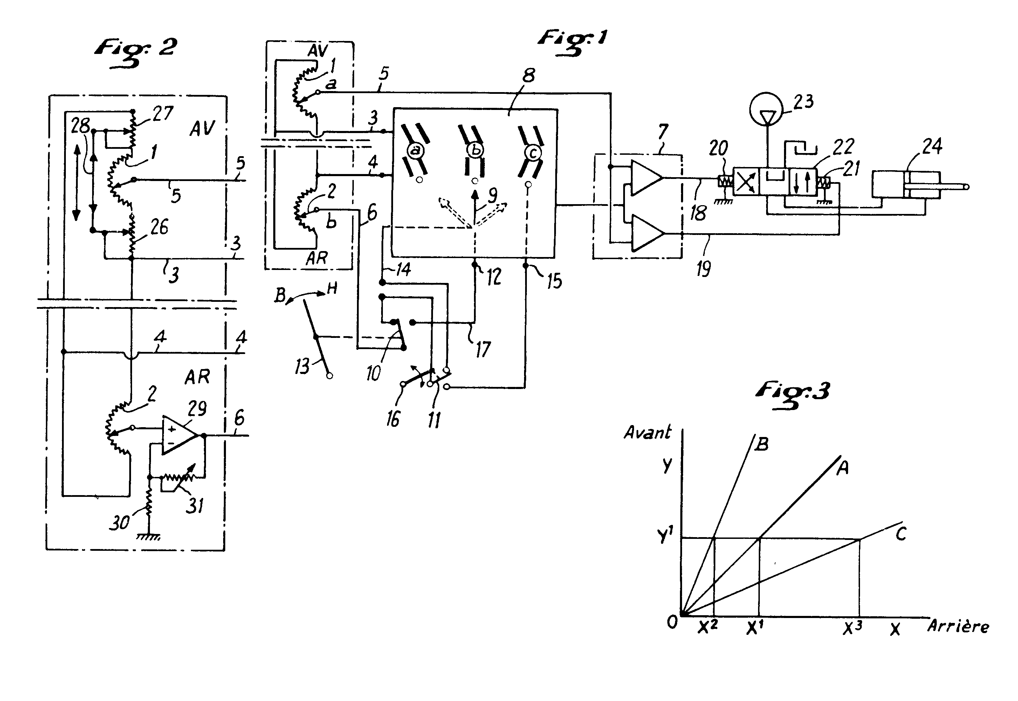

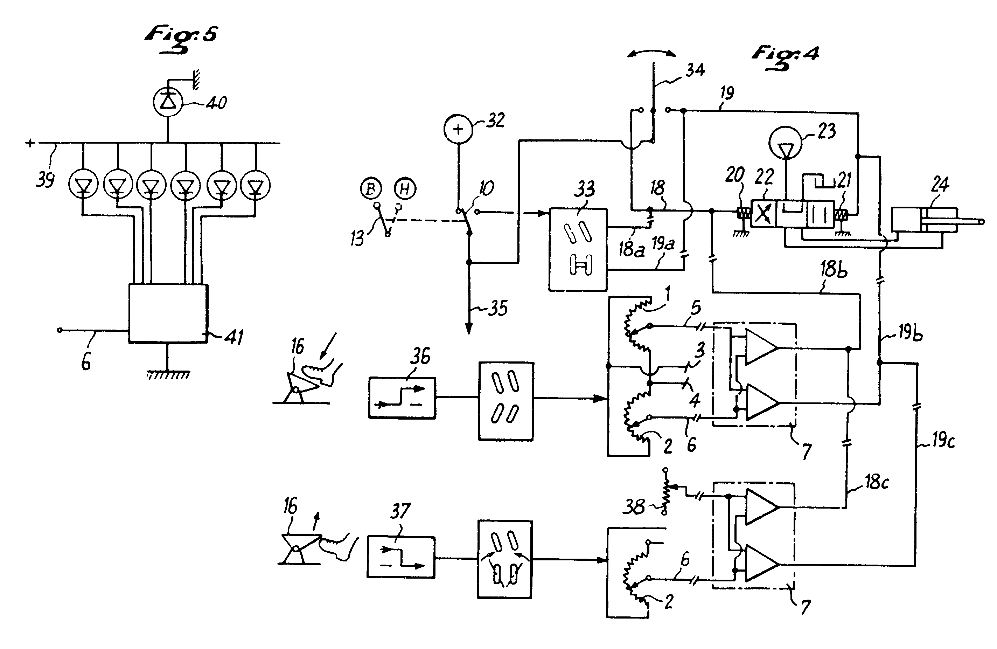

Lorsque la pédale 16 n'est pas mise en action, la liaison 6 arrive au programmateur 8 par l'entrée 14 qui commande la disposition "a" (roues avant et arrière en parallèle), en passant à travers l'inverseur 10 puis l'inverseur 11, comme cela est représenté à la figure 1.

A la sortie du compacteur 7, deux liaisons 18 et 19 conduisent aux électro-aimants 20 et 21 qui actionnent l'électrovalve 22 qui conduit le fluide sous pression de la pompe 23 à l'une ou l'autre chambre du vérin 24, commandant de façon connue l'orientation des roues arrière dans un sens ou dans l'autre.

La direction de l'essieu avant, non représenté, est assurée de façon connue par un volant et un circuit indépendant.

On comprend ainsi qu'une action sur la pédale 16 fait passer temporairement le mode de braquage, quel que soit le mode choisi par le sélecteur 9, en position virage court 8.C et qu'une action sur le levier de vitesse 13 a la priorité sur toute information venant soit du sélecteur 9 soit de la pédale 16, et commande le mode 8b roues arrière centrées et bloquées, roues avant seules directrices.

Si l'action sur la pédale 16 cesse, ou si le levier 13 est ramené en B, on retrouve le mode choisi antérieurement.

Pour la compréhension, il a été représenté des inverseurs mécaniques 10 et 11, mais naturellement, toutes ces fonctions (capteurs 1 et 2, programmateur 8, inverseurs 10 et 11) peuvent être réalisées électroniquement, le mode d'action restant semblable. De même, il est aussi possible à partir de la détection du dépassement d'une vitesse d'avancement définie, de réaliser l'action de l'inverseur 10.

Comme il a été indiqué précédemment, il est apparu très utile, pour tenir compte des particularités du terrain et des modes d'utilisation du véhicule de pouvoir doser l'action des roues arrière directrices dans le cas de devers.

Une première variante suivant le brevet, consiste à disposer un moyen permettant d'agir sur la loi définissant l'orientation des roues arrière -en comparaison de celle des roues avant.

Ainsi, on peut, par exemple, réduire l'angle lorsque le terrain est léger et que la charge est réduite.

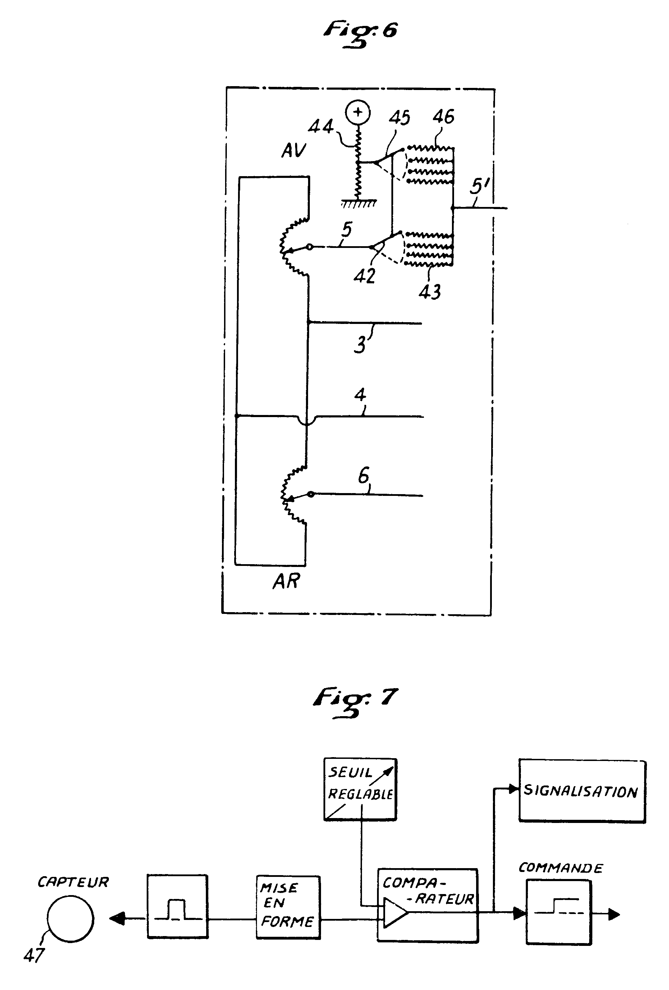

La figure 3 montre la variation de la loi de proportionnalité entre l'angle d'orientation des roues avant et celui des roues arrière.

L'abaque montre les angles d'orientation en Y pour les roues avant, en X pour les roues arrière.

Si le rapport est de 1/1, suivant la droite O A, pour un angle des roues avant $Y_1$, les roues arrière s'orientent suivant $X_1$, ce qui est le fonctionnement déjà décrit, mais si on se déplace sur une droite OB, par le même angle $Y_1$ les roues arrière s'orienteront suivant $X_2$ (inférieur à $X_1$).

Si on déplace sur la droite OC, l'angle des roues arrière sera $X_3$ (supérieur à $X_1$).

Chacune de ces dispositions, peut être suivant le but recherché, appliquée soit au capteur des roues avant 1 soit au capteur des roues arrière 2.

La figure 2 modifiant la partie de la figure 1 encadrée en traits tiretés montre par exemple un capteur avant comprenant un potentiomètre 1 délivrant l'information de l'orientation en 5. L'alimentation étant réalisée par les liaisons 3 et 4 , au potentiomètre 1 sont accolées des résistances réglables 26 et 27, qui sont réglées simultanément par la commande 28, par exemple, à titre explicatif, si on prend la valeur du potentiomètre 1 pour R1 et ceux des potentiomètres 26 et 27 égaux à R26, la variation de tension dans 5 sera proportionnel dans le montage normal à $\underline{1}$ et avec les potentiomètres 26 et 27 dans le

R1

dans le circuit à

$$\frac{1}{R1\ +\ 2\ R\ 26}$$

qui est plus faible, donc l'asservissement conduira à ce que l'angle d'orientation des roues AR soit plus faible. A titre d'autre exemple, on peut aussi utiliser un dispositif qui augmente les variations de tension du potentiomètre arrière -ce qui se produirait sur la figure 3 en utilisant la courbe B.

A la sortie du capteur 2, figure 2, de l'essieu AR, on dispose sur la liaison 6 d'un amplificateur 29 qui amplifie les signaux du capteur 2 par le moyen d'une réaction créée avec la résistance 30 et pilotée par la résistance ajustable 31 -ce montage simple est particulièrement adapté à l'utilisation d'une alimentation symétrique.

Un autre perfectionnement de l'invention est représenté schématiquement par la figure 4.

Le programmateur 8 n'est plus nécessaire et le choix du mode de direction arrière peut être commandé seulement par le levier 13 et la pédale 16 - auxquels on peut adjoindre une signalisation de repérage du mode de direction réellement utilisé.

L'alimentation figurée en 32 est sous la dépendance du levier 13 par l'interrupteur 10 qui dirige : soit en position H vers l'ordonnateur 33 -qui commande "roues arrière centrées et bloquées"- par les liaisons 18a et 19a ; soit en position B - vers le manipulateur 34 et l'alimentation 35 vers la pédale 16.

Le manipulateur 34 permet d'intervenir directement par les liaisons 18 et 19 sur les électrovannes 20 et 22 commandant l'orientation des roues arrière, dans le sens et avec l'amplituide désirée -ce qui permet au conducteur de doser l'effet de direction suivant les conditions.

Lorsque le levier 13 est en position B, la pédale 16 est alimentée et en service -c'est-à-dire qu'une action sur la pédale 16 amène les roues arrière en position "virage", les deux capteurs avant 1 et arrière 2, commandant au calculateur 7, l'orientation nécessaire des roues arrière par les liaisons 18b et 19b.

Lorsque l'action sur la pédale 16 cesse, une disposition particulière prévoit que toute interruption de l'action sur cette pédale 16 se traduit par une commande (figurée schématiquement en front descendant 37, en opposition du front montant 36 lors de l'action sur la pédale) remplaçant la consigne du capteur avant 1 par la référence avec une valeur réglable, telle celle de l'ajustable 38 indiquant au comparateur 7 la position centrée des roues arrière contrôlées par le capteur 2. Les liaisons 18c et 19c assurant le contrôle de l'électrovanne 22.

Ainsi les manoeuvres sont beaucoup plus simples et sûres. Car après chaque action sur la pédale - correspondant à un virage- les roues arrière se remettent ensuite en position centrée, ce qui est nécessaire, puisque la pente change de sens après un virage.

La figure 5 représente schématiquement une signalisation indiquant la position des roues arrière pour faciliter la conduite.

Un calculateur 41 alimenté en 39 est piloté par la liaison 6 du capteur d'orientation des roues arrière 2.

A chaque position des roues correspond soit l'allumage d'une lampe ou diode ou celle d'une barre.

Pour mieux expliciter la position centrée, une diode 40 indépendante du calculateur matérialise cette position.

La figure 6 représente une variante de réalisation de la liaison entre les capteurs avant 1 et arrière 2 et le programmateur 8.

Il s'est en effet avéré que le dispositif représenté aux figures 1 et 2 oblige à employer des éléments de fabrication (tels par exemple que les résistances réglables 26 et 27) de valeur sûre et dont les écarts possibles soient bien définis et dans un rapport précis entre eux.

Selon la variante représentée à la figure 6 les potentiomètres AV-1 et AR-2 sont branchés directement, le curseur du potentiomètre avant 1 est relié par la liaison 5 à un commutateur 42 qui peut mettre en série différentes résistances 43 et en outre le pont 44 ou une résistance ajustable équivalente définit une tension fixe qui, par le commutateur 45 peut être mis en série avec l'une des résistances 46, et c'est la valeur moyenne des deux tensions qui sera conduite par la ligne 5′, qui remplace la ligne directe 5.

Si les valeurs des différentes résistances 43 et 46, définies par une position correspondante des commutateurs liés 42 et 45 sont telles que :

$$\frac{1}{R43} + \frac{1}{R46} = \frac{1}{R} = \text{constante}$$

la tension moyenne en 5′ sera :

$$\frac{V5'}{R} = \frac{V5}{R43} + \frac{V44}{R46} - \text{les différentes valeurs de R43 et R46}$$

peuvent donc par combinaison faire varier V5′ de V5 à V44, ce qui donne une loi de variation simple et stable et de plus simplifie le câblage des potentiomètres 1 et 2.

Il est également apparu que le commande de l'inverseur 10 au moyen du levier 13 interdit tout usage du mode "c" quand il est en position H alors que cela peut s'avérer utile ; que donc il pouvait être avantageux de remplacer l'action de levier 13 de gamme de vitesses par un système de détection de la vitesse réelle du véhicule. La figure 7 illustre cette variante.

Le capteur 47 détecte la vitesse du véhicule et l'information est mise en forme puis comparée à une valeur de seuil réglable pour fournir un signal de commande dont l'action peut remplacer ou compléter celle du levier 13.

EP 0 228 962 B1

Il est aussi particulièrement utile de prévoir une signalisation indiquant au conducteur que la vitesse est telle qu'il se trouve -ou non- dans la plage où la direction arrière peut être utilisée pour les virages.

Cette signalisation peut être lumineuse ou sonore par exemple.

## Revendications

1. Système de commande de direction pour véhicules automoteur comportant au moins deux essieux directeurs, les roues d'un essieu (avant par exemple) étant orientées directement par un système connu de direction, alors que l'orientation des roues d'au moins un autre essieu est sous la dépendance d'un asservissement, recevant des informations sur l'orientation des différentes roues, par exemple par des capteur (1, 2) et pouvant utiliser différents modes de direction (8a, 8b, 8c), par exemple parallèle (a) ou opposé (c) ou bloqué sur la position centrée (b), ces modes étant déterminés par un moyen de sélection approprié, caractérisé en ce qu'il comporte au moins deux moyens distincts (13, 16) de modification du mode d'asservissement qui pendant leur actionnement annulent temporairement le mode d'asservissement choisi pour le faire passer en un autre mode défini, la suppression de l'actionnement de ces moyens (13, 16) ramenant le mode choisi antérieurement et en ce que l'un desdits moyens (13) de modification a la priorité absolue à la fois sur le moyen de sélection initial et sur le ou les autre(s) moyen(s) (16) de modification afin d'amener le système d'asservissement à la position (8b) assurant la direction bloquée en position centrée.

2. Système selon la revendication 1, caractérisé en ce que le moyen (13) de modification ayant la priorité absolue est commandé par le choix de la gamme de vitesses.

3. Système selon la revendication 1, caractérisé en ce que le moyen (13) de modification ayant la priorité absolue est commandé à partir d'une certaine vitesse déterminée de déplacement.

4. Système selon l'une quelconque des revendications 1 à 3, caractérisé en ce qu'au moins une modification du mode est commandée par une pédale (16).

5. Système selon la revendication 4, dans lequel le mode, après modification correspond au mode opposé correspondant aux virages (8c).

6. Système selon l'une quelconque des revendications 1 à 5, caractérisé par le fait que l'un des capteurs est relié directement et l'autre capteur indirectement par l'intermédiaire de deux inverseurs à un comparateur (7), par exemple le capteur (1) de position des roues avant est relié, par une liaison (5), directement au comparateur (7), tandis que le capteur (2) de position des roues arrière est relié audit comparateur (7) par l'intermédiaire d'une liaison (6) comportant deux inverseurs (10, 11) aboutissant à un programmateur (8) lui-même relié audit comparateur (7) ; ce dernier comparant les deux séries de signaux reçus et actionnant par une électrovanne (22) un vérin (24) commandant le braquage des roues arrière.

7. Système selon la revendication 6, dans lequel le programmateur (8) comporte une commande manuelle de sélection (9) par laquelle on peut choisir l'un des trois modes de conduite (8a, 8b, 78c), l'inverseur (10) commandé par la détection de la vitesse du véhicule (47) ou par le levier de gamme de vitesse (13) définissant, soit une alimentation directe du programmateur (8) en mode de conduite correspondant aux roues arrière en position centrée bloquée (8b) soit une alimentation dudit programmateur à travers le deuxième inverseur (11) commandé par la pédale (16) de telle sorte que la position pédale activée corresponde au mode de conduite, roues braquées en directions opposées (8c) et la position pédale non activée au mode de conduite roues braquées dans le même sens soit par le programmateur (8a) soit par un levier de commande directe (34).

8. Système selon la revendication 7, caractérisé en ce qu'il comporte un moyen complémentaire pour établir à volonté une proportionnalité dans le braquage dans le même sens des roues avant et arrière.

9. Système de direction selon la revendication 8, dans lequel l'indication fournie par le capteur (1) lié à un essieu (avant par exemple) se trouve diminué suivant une loi définie (comme par exemple par les résistances (26, 27).

6

**10.** Système de direction selon la revendication 8, dans lequel l'indication utilisée pour le contrôle, du capteur (6) (AR, par exemple) de l'essieu non dirigé directement, se trouve augmentée suivant une loi définie (comme par exemple par le comparateur (29) et la boucle (30, 31).

**11.** Système selon la revendication 9 ou 10, dans lequel la loi régissant la modification de l'indication du ou des capteurs considérés, soit (1), soit (6) est réglable entre un maximum tel que les roues soient parallèles et un minimum où les roues restent sensiblement fixes et centrées.

**12.** Système selon la revendication 11, dans lequel le réglage de la modification de l'indication du ou des capteurs considérés (1 et 6) est opéré par l'action d'un ou plusieurs potentiomètres réglables (26, 27, 31).

**13.** Système de direction selon l'une quelconque des revendications précédentes, dans lequel au moins un moyen complémentaire (34) permet au conducteur d'agir directement sur la commande d'orientation des roues de l'autres essieu (arrière par exemple).

**14.** Système de direction selon l'une quelconque des revendications précédentes, dans lequel au moins un moyen intervient par son action pour amener les roues de l'essieu (AR par exemple) en position droite, centrées.

**15.** Système de direction selon l'une quelconque des revendications 1 à 5, dans lequel un premier moyen (16) est réalisé sous forme d'un organe ayant une position de rappel automatique.

**16.** Système de direction tel que défini en 15, dans lequel le retour de l'organe à sa position de rappel automatique agit sur la commande des roues (AR par exemple) pour les ramener, si elles n'y sont pas) en position droite, centrées.

**17.** Système de direction selon l'une quelconque des revendications 1 à 5 ou 15, dans lequel un premier moyen (16) modifiant temporairement pendant son action le mode d'asservissement utilisé, entraîne la disposition "virages" (roues arrière en opposition des roues avant).

**18.** Système de direction selon l'une quelconque des revendications 1 à 5 ou 15 à 17, dans lequel le deuxième moyen (le levier 13) agissant sur la loi d'asservissement de l'autre essieu (AR par exemple) par rapport au premier (Avant par exemple) est lié au choix d'au moins une combinaison de la gamme des vitesses.

**19.** Système de direction selon la revendication 1 à 5 ou 15 dans lequel le deuxième moyen agissant sur la loi d'asservissement de l'autre essieu (AR par exemple) par rapport au premier (AV par exemple) est lié au dépassement par la vitesse d'avancement d'une valeur prédéterminée.

**20.** Système de direction selon la revendication 18 ou 19 dans lequel dans cette position toute modification du mode d'asservissement ou de commande directe à partir de la position roues droites centrées soit impossible.

**21.** Système de direction selon l'une quelconque des revendications précédentes, dans lequel un moyen d'affichage permet au conducteur de connaître la position des roues du deuxième essieu (arrière) non dirigé directement, la position roues droites centrées pouvant être spécialement indiquée comme repère (40).

**22.** Système de direction selon l'une quelconque des revendications précédentes, caractérisé par le fait que l'indication fournie par un capteur (AV par exemple) est comparée à une valeur fixe et que la valeur utilisée pour l'asservissement est une valeur dépendant de ces deux valeurs.

**23.** Système selon la revendication 22, dans lequel la tension fournie par un capteur (1 de l'essieu avant) est comparée à une tension fixe, et que la valeur moyenne de ces deux tensions affectées chacune d'un coefficient, est utilisée pour l'asservissement.

**24.** Système selon la revendication 22 ou 23, dans lequel la variation des coefficients affectant les tensions de référence s'opère par commutation à différentes valeurs fixées.

**Claims**

**1.** Steering control system for automotive vehicles having at least two steering axles, the wheels of one axle (the front axle for example) being oriented directly by a known steering system, whilst the orientation of the wheels of at least one other axle is dependent on a servo system. receiving information concerning the orientation of the different wheels, for example by means of sensors (1, 2) and being able to use different steering modes (8a, 8b, 8c), for example parallel (a) or opposite (c) or locked in the centred position (b), these modes being determined by a suitable selection means, characterized in that it comprises at least two separate means (13, 16) for modifying the servo mode which, when in operation, temporarily cancel the servo mode selected such that it can be changed to a different defined mode, the cancellation of the operation of these means (13, 16) recalling the previously selected mode; and in that one of the said modifying means (13) has absolute priority both over the initial selection means and over the other modifying means (16) in order to bring the servo system into the position (8b) which locks the steering in the centred position.

**2.** System according to claim 1, characterized in that the modifying means (13) which has absolute priority is controlled by the speed range selection.

**3.** System according to claim 1, characterized in that the modifying means (13) which has absolute priority is controlled from a given determined displacement speed.

**4.** System according to any one of claims 1 to 3, characterized in that at least one mode modification is controlled by a pedal (16).

**5.** System according to claim 4, in which, after modification, the mode corresponds to the opposite mode corresponding to cornering (8c).

**6.** System according to any one of claims 1 to 5, characterized in that one of the sensors is connected directly and the other sensor is connected indirectly by means of two switches to a comparator (7), for example the front wheel position sensor (1) is directly connected by a direct connection (5) to the comparator (7), whilst the rear wheel position sensor (2) is connected to the said comparator (7) by means of a connection (6) comprising two switches (10, 11) which lead to a programmer (8) which is itself connected to the said comparator (7), the latter comparing the two series of signals received and activating a jack (24), via an electrovalve (22), controlling the angle of lock of the rear wheels.

**7.** System according to claim 6, in which the programmer (8) comprises a manual selection control device (9) by means of which it is possible to select one of the three driving modes (8a, 8b, 8c), the switch (10) controlled by the detection of the speed of the vehicle (47) or by the gear lever (13) defining either a direct supply to the programmer (8) in the driving mode corresponding to the rear wheels being locked in the centred position (8b) or a supply to the said programmer via the second switch (11) controlled by the pedal (16) such that the activated pedal position corresponds to the driving mode with the wheels locked in opposite directions (8c) and the non-activated pedal position corresponds to the driving mode with the wheels locked in the same direction either by the programmer (8a) or by a direct control lever (34).

**8.** System according to claim 7, characterised in that it comprises an additional means for establishing proportionality in the lock angle of the front and rear wheels in the same direction.

**9.** Steering system according to claim 8, characterized in that the signal supplied by the sensor (1) connected to an axle (front axle for example) is decreased in accordance with a specific law (for example by resistors 26, 27)).

**10.** Steering system according to claim 8, in which the signal used for controlling the sensor (6) (rear sensor for example) on the axle which is not steered directly is increased in accordance with a specific law (for example by the comparator (29) and the circuit 30, 31)).

EP 0 228 962 B1

**11.** System according to claim 9 or 10, in which the law controlling the modification of the signal of the sensor or sensors in question, either (1) or (6), can be adjusted between a maximum such that the wheels are parallel and a minimum where the wheels are substantially fixed and centred.

**12.** System according to claim 11, in which the modification of the signal from the sensor or sensors in question (1 and 6) is adjusted by the action of one or more adjustable potentiometers (26, 27, 31).

**13.** Steering system according to any one of the preceding claims, in which at least one additional means (34) enables the driver to act directly on the wheel orientation control of the other axle (rear axle for example).

**14.** Steering system according to any one of the preceding claims, in which at least one means acts so as to bring the wheels of the axle (rear axle for example) into the straight, centred position.

**15.** Steering system according to any one of claims 1 to 5, in which a first means (16) is in the form of a member having an automatic return position.

**16.** Steering system as defined in claim 15, in which the return of the member to its automatic return position acts on the device controlling the wheels (rear wheels for example) in order to return them to the straight centred position if they are not already in such a position.

**17.** Steering system according to any one of claims 1 to 5 or 15, in which a first means (16) which during operation temporarily modifies the servo mode used brings about the "cornering" arrangement (rear wheels in opposition to the front wheels).

**18.** Steering system according to any one of claims 1 to 5 or 15 to 17, in which the second means (lever 13) acting on the servo law of the other axle (rear axle for example) relative to the first axle (front axle for example) is connected as desired to at least one speed range combination.

**19.** Steering system according to any one of claims 1 to 5 or 15 in which the second means acting on the servo law of the other axle (rear axle for example) relative to the first axle (front axle for example) is connected to the exceeding of a predetermined value by the advance speed.

**20.** Steering system according to claim 18 or 19, in which, in this position, any modification of the servo mode or of the direct control system from the position where the rear wheels are straight and centred is impossible.

**21.** Steering system according to any one of the preceding claims, in which a display means enables the driver to know the position of the wheels on the second axle (rear) which are not steered directly, it being possible for the centred straight wheel position to be displayed especially as mark (40).

**22.** Steering system according to any one of the preceding claims, characterized in that the signal provided by a sensor (front sensor for example) is compared with a fixed value; and in that the value used for the servo is a value dependent on these two values.

**23.** System according to claim 22, in which the voltage supplied by a sensor (1 on the front axle) is compared with a fixed voltage; and in that the average value of these two voltages, each allocated a coefficient, is used for the servo system.

**24.** System according to claim 22 or 23, in which the variation in the coefficients allocated to the reference voltages operates by switching to different fixed values.

**Patentansprüche**

**1.** Richtungssteuersystem für selbstfahrende Fahrzeuge, die wenigstens zwei lenkbare Achsen aufweisen, wobei die Räder einer Achse (beispielsweise der Vorderachse) direkt durch ein bekanntes Lenksystem gesteuert werden, während die Richtung der Räder wenigstens einer weiteren Achse von einem Regelsystem gesteuert werden, das Informationen über die Richtung der verschiedenen Räder bei-

9

spielsweise durch Aufnehmer (1, 2) empfängt und das verschiedene Richtungsmoden (8a, 8b, 8c) verwenden kann, beispielsweise parallel (a) oder entgegengesetzt (c) oder auf die zentrierte Position blockiert (b), wobei diese Moden durch eine geeignete Wähleinrichtung bestimmt sind, **dadurch gekennzeichnet,** daß es wenigstens zwei verschiedene Einrichtungen (13, 16) zur Änderung der Regelungsart enthält, die während ihrer Wirksamkeit vorübergehend die gewählte Regelungsart aufheben, um das System in eine andere definierte Betriebsart übergehen zu lassen, wobei die Unterdrükkung der Wirkung dieser Einrichtungen (13, 16) die zuvor gewählte Betriebsart wieder einstellt, und daß eine der genannten Änderungseinrichtungen (13) absolute Priorität vor der ursprünglichen Wähleinrichtung wie auch über die andere(n) Änderungseinrichtung(en) (16) hat, um das Regelsystem in die Position (8b) zu führen, die die in der Mittenposition blockierte Richtung sicherstellt.

2. System nach Anspruch 1, **dadurch gekennzeichnet,** daß die Änderungseinrichtung (13), die die absolute Priorität hat, durch die Wahl des Getriebeganges gesteuert wird.

3. System nach Anspruch 1, **dadurch gekennzeichnet,** daß die Änderungseinrichtung (13), die die absolute Priorität hat, von einer gewissen vorbestimmten Verstellgeschwindigkeit ausgehend gesteuert wird.

4. System nach einem der Ansprüche 1 bis 3, **dadurch gekennzeichnet,** daß wenigstens eine Veränderung der Betriebsart von einem Pedal (16) gesteuert wird.

5. System nach Anspruch 4, in dem die Betriebsart nach Änderung der entgegengesetzten Betriebsart entsprechend den Kurven (8c) entspricht.

6. System nach einem der Ansprüche 1 bis 5, **dadurch gekennzeichnet,** daß der eine der Aufnehmer direkt und der andere Aufnehmer über zwei Umschalter indirekt mit einem Komparator (7) verbunden sind, wobei beispielsweise der Aufnehmer (1) für die Position der Vorderräder über eine Leitung (5) direkt mit dem Komparator (7) verbunden ist, während der Aufnehmer (2) für die Position der Hinterräder mit dem genannten Komparator (79 über eine Leitung (6) verbunden ist, die zwei Inverter (10, 11) aufweist, die zu einem Programmierer (8) führen, der seinerseits mit dem Komparator (7) verbunden ist, wobei letzterer die zwei empfangenen Signalserien vergleicht und über ein Elektroventil (22) auf einen Stellantrieb (24) einwirkt, der die Auslenkung der Hintertäder hervorruft.

7. System nach Anspruch 6, bei dem der Programmierer (8) eine manuelle Wähleinrichtung (9) enthält, mit der man eine der drei Lenkbetriebsarten (8a, 8b, 8c) wählen kann, wobei der Umschalter (10), der durch die Ermittlung der Geschwindigkeit des Fahrzeugs (47) oder durch den Gangwählhebel (13) gesteuert wird, entweder eine direkte Versorgung des Programmierers (8) in der Lenkbetriebsart definiert, die den in der Mittenstellung blockierten Hinterrädern entspricht (8b), oder eine Vesorgung des Programmierers über den zweiten Umschalter (11) einrichtet, der durch das Pedel (16) derart gesteuert wird, daß die gedrückte Stellung des Pedals der Lenkbetriebsart entspricht, in der die Räder in entgegengesetzten Richtungen ausgelenkt sind (8c), und die nicht gedrückte Stellung des Pedals der Lenkbetriebsart entspricht, in der die Räder in gleichem Sinne ausgelenkt sind, sei es durch den Programmierer (8a) oder durch einen Direktsteuerhebel (34).

8. System nach Anspruch 7, **dadurch gekennzeichnet,** daß es eine komplementäre Einrichtung enthält, um nach Wahl eine Proportionalität in der Auslenkung im gleichen Sinne der Vorder- und der Hinterräder einzurichten.

9. Lenksystem nach Anspruch 8, bei dem die von dem Aufnehmer (1), der einer Achse (beispielsweise Vorderachse) zugeordnet ist, gelieferte Größe entsprechend einem definierten Gesetz (wie beispielsweise durch die Widerstände 26, 27) vermindert wird.

10. Längssystem nach Anspruch 8, bei dem die für die Steuerung verwendete Größe des Aufnehmers (6) (beispielsweise AR) der nicht direkt gelenkten Achse nach einem bestimmten Gesetz (wie beispielsweise durch den Komparator (29) und die Schleife (30, 31)) vergrößert wird.

EP 0 228 962 B1

**11.** System nach Anspruch 9 oder 10, bei dem das Gesetz, das die Modifikation der Größe des oder der betrachteten Aufnehmer(s) regiert, sei es der Aufnehmer (1) oder der Aufnehmer (6) zwischen einem Maximum, bei dem die Räder beispielsweise parallel sind, und einem Minimum, bei dem die Räder im wesentlichen fest und zentriert bleiben, regelbar ist.

**12.** System nach Anspruch 11, bei dem die Regelung der Änderung der Größe des oder der betreffenden Aufnehmer (s) (1 und 6) durch die Wirkung eines oder mehrerer einstellbarer Potentiometer (26, 27, 31) bewirkt wird.

**13.** Lenksystem nach einem der vorhergehenden Ansprüche, bei dem wenigstens eine komplementäre Einrichtung (34) es dem Fahrzeugführer erlaubt, direkt auf die Richtungssteuerung der Räder der anderen Achse (beispielsweise Hinteachse) einzuwirken.

**14.** Lenksystem nach einem der vorhergehenden Ansprüche, bei dem wenigstens eine Einrichtung durch ihre Betätigung interveniert, um die Räder der Achse (beispielsweise AR) in gerade, zentrierte Position zu bringen.

**15.** Lenksystem nach einem der Ansprüche 1 bis 5, bei dem eine erste Einrichtung (16) in Form eines Organs realisiert ist, das eine automatische Rückstellposition aufweist.

**16.** Lenksystems wie beispielsweise nach Anspruch 15, bei dem die Rückführung des Organs in seine automatische Rückstellposition auf die Steuerung der Räder (beispielsweise AR) einwirkt, um sie in die gerade, zentrierte Position rückzustellen, sofern sie es nicht sind.

**17.** Lenksystems nach einem der Ansprüche 1 bis 5 oder 15, bei dem eine erste Einrichtung (16), die bei ihrer Betätigung die verwendete Regelungsart vorübergehend ändert, die Disposition "Kurven" einstellt (bei der die Hinterräder entgegengesetzt zu den Vorderrädern eingestellt werden).

**18.** Lenksystem nach einem der Ansprüche 1 bis 5 oder 15 bis 17, bei dem die zweite Einrichtung (der Hebel 13), der auf das Regelgesetz der anderen Achse (beispielsweise AR) gegenüber der ersten (beispielsweise Vorderachse) einwirkt, nach Wahl mit wenigstens einer Kombination von Getriebegängen verbunden ist.

**19.** Lenksystem nach Anspruch 1 bis 5 oder 15, bei dem die zweite Einrichtung, die auf das Regelsystem der anderen Achse (beispielsweise AR) gegenüber der ersten (beispielsweise AV) einwirkt, auf das Überschreiten eines vorbestimmten Wertes der Fahrgeschwindigkeit anspricht.

**20.** Lenksystem nach Anspruch 18 oder 19, bei dem in dieser Position jede Änderung der Regelbetriebsart oder der Direktsteuerung aus der geraden, zentrierten Radstellung unmöglich ist.

**21.** Lenksystem nach einem der vorhergehenden Ansprüche, bei dem eine Anzeigeeinrichtung es dem Fahrzeugfuhührer gestattet, die Position der Räder der zweiten Achse (Hinterachse), die nicht direkt gelenkt ist, zu kennen, wobei die gerade, zentrierte Position der Räder speziell als ein Bezug (40) angezeigt werden kann.

**22.** Lenksystem nach einem der vorhergehenden Ansprüche, **dadurch gekennzeichnet,** daß die von einem Aufnehmer (beispielsweise AV) gelieferte Anzeige mit einem Festwert verglichen wird, und daß der für die Regelung verwendete Wert ein Wert ist, der von diesen zwei Werten abhängt.

**23.** System nach Anspruch 22, bei dem die von einem Aufnehmer (1 für die Vorderachse) gelieferte Spannung mit einer Festspannung verglichen wird, und daß der Mittelwert aus diesen zwei jeweils von einem Koeffizienten beeinflußten Spannungen für die Regelung verwendet wird.

**24.** System nach Anspruch 22 oder 23, bei dem die Variation der Koeffizienten, die die Bezugsspannungen beeinflussen, durch Umschaltung auf verschiedene Festwerte erzeugt wird.

11

EP 0 228 962 B1

Fig. 2

Fig. 1

Fig. 3

AV

AV

AR

AR

Avant

Arrière

B → H

*Fig.5*

*Fig.4*

EP 0 228 962 B1

## Fig. 6

44  45  46

AV

5'

5

42  43

3

4

6

AR

## Fig. 7

SEUIL
REGLABLE

SIGNALISATION

CAPTEUR

MISE
EN
FORME

COMPA-
-RATEUR

COMMANDE

47